# EUROPEAN PATENT SPECIFICATION

(11) **EP 1 678 251 B1**
(45) Date of publication and mention of the grant of the patent: **06.05.2009**
(21) Application number: 04768648.0
(22) Date of filing: 23.09.2004
(51) Int. Cl.: C08L 19/00, C08L 21/00, C08L 17/00

(54) **RUBBER COMPOSITIONS, METHODS OF MAKING RUBBER COMPOSITIONS, RUBBER AND RUBBER-CONTAINING ARTICLES**
KAUTSCHUKZUSAMMENSETZUNGEN, VERFAHREN ZUR HERSTELLUNG VON KAUTSCHUKZUSAMMENSETZUNGEN, KAUTSCHUK UND KAUTSCHUKHALTIGE GEGENSTÄNDE
COMPOSITIONS A BASE DE CAOUTCHOUC, PROCEDES DE FABRICATION DE COMPOSITIONS A BASE DE CAOUTCHOUC, CAOUTCHOUC ET ARTICLES CONTENANT DU CAOUTCHOUC

(30) Priority: 23.09.2003 GB 0322277; 02.04.2004 GB 0407576; 15.06.2004 GB 0413345
(43) Date of publication of application: 12.07.2006
(73) Proprietor: HAYDALE LIMITED, Briton Ferry SA11 2YW (GB)
(72) Inventor: WALTERS, Ian, Swansea West Glamorgan SA4 9RU (GB); HOUGH, Philip, Swansea West Glamorgan SA4 9RU (GB)
(74) Representative: Stoner, Gerard Patrick
(86) International application number: PCT/GB2004/004104
(87) International publication number: WO 2005/028552

(56) References cited:
- EP-A- 0 135 595
- EP-A- 0 508 056
- EP-A- 0 780 430
- WO-A-88/02313
- WO-A-03/014462
- GB-A- 2 350 839
- US-A- 4 481 335
- US-A- 5 298 210
- US-A- 5 425 904
- US-A1- 2003 033 779

## Description

### FIELD OF THE INVENTION

This invention has to do with new rubber compositions and the way in which they are made. It also relates to uses of the compositions to make articles, and to the resulting new articles. A particular feature of the new proposals relates to the incorporation of cured rubber particles, especially comminuted recycled rubber, into curable rubber compounds. Another important aspect is in enabling the preparation of curable rubber compounds that are coherent and roll-processable, so that they can readily be made into or incorporated in laminar articles such as mats and flooring.

### BACKGROUND

Rubber materials, synthetic and natural, are available in many kinds and with a wide variety of uses. A typical commercial rubber composition contains a curable base rubber such as natural rubber, SBR, nitrile rubber, EPDM, chloroprene etc. or some blend thereof, together with a curing system by which the base rubber can be crosslinked to form an article of stable defined shape. Most uses rely on the inherent properties of the rubber system but require modification of the mechanical properties, so rubber compounds almost invariably contain fillers and extenders of various kinds. A wide variety of fillers and extenders is known to the skilled person; their functions according to context of use include increasing the tensile strength, tear strength, abrasion resistance and compression/extension modulus of the cured composition, reducing the amount of curable rubber needed (and hence the cost), and in some cases conferring special properties such as conductivity. Compared with other polymers however rubber tends to be expensive. For example despite its suitability for use in flooring materials, rubber tends to be supplanted by other cheaper synthetic materials such as PVC or polypropylene.

Since rubber is nevertheless used in vast quantities, there has for years been interest in recycling or reworking vulcanised (cured) waste rubber products. For example ground rubber from tyres, buffings and other sources is commonly added as a filler into virgin rubber compounds to reduce costs. Non-rubber binders such as polyurethane are also used.

The size of commercially available ground rubber particles varies widely: largest particles can be as large as 15 mm with the majority being from about 3 mm down to about 0.1 mm, and significant levels of very fine 'dust'. The amount that can be used depends on the end use of the filled product. Bulky products such as dock fenders which undergo modest dynamic stresses can use high proportions of recycled ground rubber, up to about 75%. Where significant elastomeric performance is required in the product, however, only low levels (up to 10 or 15 wt%) can be tolerated because the addition of ground rubber lowers tensile strength and dynamic properties, as well as decreasing the green strength of the rubber compound making it hard to process. Over the years a number of proposals have been made for improving incorporation of recycled ground rubber so that the level of recycling can be increased. See for example Polymer Engineering and Science, 15 February 1993 Vol. 33 No. 3 page 166, discussing the incorporation of cryogenically ground rubber tyre material as filler in polyolefin blends. See also Rubber World, Vol. 12 1983 page 36 (Stark and Leighton) and related US-A-4481335. The latter patent describes treating the surface of ground scrap rubber from tyres with a liquid rubber containing a high level of curing agent, creating a crumb rubber preparation with a modified surface which can be directly compression moulded, and described as a free-flowing particulate product. It also describes incorporating this pre-treated crumb rubber into base rubber compounds as an extender or filler, in line with the known uses. The compounds are compression moulded, but cannot be roll-processed.

US 5425904 describes activating waste rubber particles by treating them with a rubber latex and a vulcanising agent. This is described as a development from US 4481335 mentioned above. The particles may be used as such for the manufacture of articles, or blended into uncured rubber mixtures.

US 5298210 combines small amounts (from 1 to 4 wt%) of cured rubber particulate into an uncured base rubber, as a means of reducing bubbles in a resulting sheet material.

EP 508056 describes crosslinkable mixtures in which recycled rubber granulate is blended with a solution of low molecular weight curable rubber in mineral oil.

GP 2350839 describes devulcanising the surfaces of recycled crumb rubber particles using heat and 2-butanol, after which they are combined with sulphur-curable virgin rubber.

EP 0780430 discusses the combination of crumb rubber with uncured rubber; the theme of the document is the use of a proportion of thermoplastic resin in the composition to increase its rigidity, since otherwise the crumb rubber-containing composition tends to be very soft.

WO88/02313 describes moulding compositions for vehicle tyres, containing surface-treated particles of cured rubber. The prior surface treatment of the particles uses a liquid, sulphur-curable polymeric binder which is soluble in benzene or hexane and softens the cured rubber particle surfaces.

WO03/014462 describes a mat with a tufted textile layer on a backing layer bonded to an underlying rubber layer. The rubber layer contains rubber particles (which may or may not be recycled) in a matrix of a second rubber as a binder material.

US2003/0033779 US A1 describes a sound-insulating flooring material with a decorative layer on a sound-absorbing substrate made from recycled rubber, made by mixing recycled SBR and natural rubber with a polyurethane, curing at a moderate temperature and cutting to form a sheet.

EP 0135595 describes making a flooring material by a continuous method in which scrap rubber particles are compressed into a layer with a pre-polymer binder, and other layers including a textile layer are superimposed.

Despite the many past proposals for improvements, it is generally true that up until now the incorporation of cured rubber particles such as ground recycled rubber into virgin rubber compounds has led to serious adverse effects on the physical properties, in particular tensile strength, tear, elongation at break and abrasion resistance. These adverse effects are reduced if smaller rubber particle sizes are used (less than about 0.4 mm), but reduction of the ground rubber particle size leads to serious difficulties of processing. It is difficult to disperse the small-particle crumb rubber in the rubber compound. Furthermore the processing capabilities needed for making certain kinds of articles, e.g. adequate handling properties for mixing, extrusion, roll-blending or calendering are lost entirely when the amount of added rubber dust rises above about 10 or 15 wt%. The mixture lacks tack and uncured rubber green strength. It cannot be roll-processed. So, in applications such as the manufacture of mats or flooring, or other products which have to be roll-processed, or any product where retention of tensile, tear, abrasion strength and compound processing is important, the use of small-particle rubber crumb/dust as an additive has been limited to low levels of from 5% to 15%. Greater additions seriously affect the physical/dynamic properties and processing options, limiting the kinds of products that can be made.

### SUMMARY OF THE INVENTION

An object of the invention is to provide new methods of incorporating particulate cured rubber into curable rubber compositions, enabling high levels of incorporation of cured particulate rubber while maintaining usable physical and dynamic properties.

Another object of the invention is to provide curable rubber compositions and cured rubber products containing high levels of recycled ground rubber.

Another object of the invention is to enable the provision of curable rubber compositions and cured rubber articles in which rubber particles of very small size are fully dispersed by means of novel rubber compounding methodology and/or materials.

Another object of the invention is to provide curable rubber compositions and cured rubber articles containing high levels of particulate cured rubber end in particular recycled rubber, in conjunction with low or zero levels of inert fillers.

Another object of the invention is to provide curable rubber compositions which can be roll-processed or extruded, containing substantial levels of particulate cured rubber e.g. above about 15 wt%.

Another object of the invention is the provision of novel floor coverings and mats, including a (preferably tufted) textile layer and a backing layer of rubber comprising a substantial proportion of recycled rubber particles.

In general terms, what we propose in a first aspect is a method of making a curable rubber according to claim 1. Crumb rubber (particulate cured rubber) is mixed with a curable base rubber and an appropriate curing system (appropriate curing or vulcanising agent(s) plus any necessary or optional accelerators and/or activators for the curable rubber concerned). Included in the mix is the liquid curable rubber component of sufficiently low viscosity to wet the crumb rubber. Adequate wetting may be evidenced by the mixed compound's ability to be roll-processed, or to form a self-supporting coherent web.

This simple but radical proposal opens the door to the inclusion of high levels of crumb rubber, at low particle sizes and hence good product quality, with maintenance of useful strength and dynamic properties. The low viscosity rubber component is or comprises a curable liquid rubber combined with the curable rubber base, which is not liquid; they are typically of a visco-elastic consistency; the Mooney viscosity (ML 1+4 @ 100°C) may be in a general range of from 10 to 105, more usually from 30 to 80, especially of from 30 to 55. Additionally the selection of lower viscosity base rubbers can itself contribute to the wetting of a significant proportion of crumb rubber. Additionally a base rubber subject to molecular cleavage, e.g. natural rubber, may be processed (e.g. by the use of one or more peptisers acting on that rubber, and/or by the application of prolonged mixing/heating conditions as known to a skilled person) to produce a low-viscosity component in the base rubber that will contribute necessary wetting of crumb rubber. This may be done before the combination with the rubber particles, e.g. by pre-working of the base rubber or a selected portion thereof.

These proposals involve a simple but radical departure from conventional modes of blending crumb rubber. The conventional wisdom is that, where a high level of a particulate filler is to be included, levels of processing oils and other (often soap-based) processing aids must be correspondingly raised to increase the compound's ability to disperse and wet the particles. The larger the weight proportion of particles, the smaller they are and/or the more complex the surface conformation (larger surface area), the greater the requirement for high levels of these processing aids. [Note that mechanically-ground particles tend to have a higher specific surface area than cryogenically-ground particles.] However these processing aids are to a significant extent alien to the curable rubber system. At high levels they cannot as easily be fully taken up by the mix, and may bloom to the surface of the resulting products. They have little chemical interaction with the rubber system, so that they do not help the uncured compound to cohere and in a cured compound they reduce the modulus. Also, when used to assist the blending of cured rubber particles, their internal lubrication function naturally involves coating the surface of the particle. As further discussed below, while promoting the necessary physical dispersion this prevents intimate interaction between the particles and the surrounding rubber matrix. Processing aid which has migrated to the surface is in itself problematic e.g. when something needs to be adhered to that surface.

By contrast, when using an added liquid curable rubber as a processing aid, these disadvantages can be avoided and complementary advantages achieved.

Firstly, the low-viscosity rubber is in itself curable and forms an integral part of the matrix of the cured compound. Furthermore it has a natural chemical affinity for the surface of the cured rubber particles, preferably being of the same rubber type or family and/or being curable by the same or a similar curing system. The process of grinding rubber into dust produces particles with a level of surface activity due to a "de-linking", typically of sulphur-carbon crosslinks. It is thought that the fresher the ground rubber, the greater the surface activity of this kind. Under suitable curing/vulcanisation conditions, these broken links may recombine and bond the particle surface chemically to the surrounding virgin compound.

The types of curable base rubber, low viscosity curable rubber component and cured rubber particle are not particularly limited. However they should be selected for compatibility with one another, and for compatibility/identity of their curing systems. This compatibility enables the low viscosity component - if initially distinct from the rest of the base rubber - to integrate fully with it. It also enables the low viscosity component (e.g. distinct liquid rubber, or low viscosity base polymer) to interact chemically with the surfaces of the cured rubber particles, where these have exposed residues of the original curing system. For example, ground particles of waste cured nitrile rubber can be incorporated in a nitrile base rubber, using a liquid nitrile rubber as processing aid. Or, ground rubber particles from used tyres (containing natural rubber (NR) and/or styrene-butadiene rubber (SBR)) are most conveniently incorporated into a natural base rubber, or an SBR base, or an NR-SBR blend, using as the special processing aid a liquid NR and/or SBR.

### Base Rubber

Preferred curable base rubbers include NR, SBR, NBR, butadiene rubber, butyl rubber, ethylene propylene diene monomer copolymer (EPDM) rubber, polychloroprene, polyisoprene (synthetic NR), and compatible blends of any of these with one another or with other rubbers, in accordance with the skilled person's knowledge. In general terms, any rubber based on the polymerisation of unsaturated groups should be usable.

The viscosity of the base rubber is selected in line with the intended use, having in mind the need to combine with the particulate cured rubber and with a distinct low viscosity curable component, liquid rubber. Typically, the base rubber Mooney viscosity (ML 1+4 @ 100°C) can be in the range 10 to 105, more usually 30 to 80. At the lower end of the viscosity range the base rubber may itself contain sufficient low viscosity component (shorter molecules) to wet cured particulate rubber filler, in which case less separate liquid rubber additive may be called for. This will depend on the absolute quantity and on the surface area (particle size) of the cured rubber particles used, as well as on any other fillers which may be present, and on the level of use of any other kinds of processing aids.

### Liquid Rubber

The separate liquid rubber added into the mix may be any low molecular weight curable rubber compatible with the base rubber and with the filler (especially particulate rubber) being used. It may be a blend of liquid rubbers with different molecular weights. The viscosity and amount of the liquid rubber can be selected by a skilled person taking into account the amount and particle size of the particulate cured rubber, as well as of any other particulate additives, of any other (non-rubber) processing aids and of the viscosity of the base rubber. Typically however the amount of liquid rubber included is at least 5 phr (parts per hundred of rubber), often at least 10 phr.

Likewise the viscosity can be selected empirically to achieve a practically effective dispersion, in line with a skilled person's normal practice, but typically a liquid rubber will have a viscosity at the mixing temperature less than about 100,000 cp, more preferably less than about 60,000 cp. Such viscosity values may be tested at a reference temperature representative of the mixing temperature, or at 100°C, or even at 40°C or room temperature. A convenient test is that of being 'pourable'. Typically the number average molecular weight is less than 500,000, more preferably less than 100,000, usually less than about 50,000.

The rubber type is selected for compatibility, as mentioned. Suitable low viscosity/liquid rubbers include SB copolymers, synthetic polyisoprenes, depolymerised and masticated NR, NBR (copolymers of acrylonitrile and butadiene), butadiene rubbers, low molecular weight EPDM rubbers, and other low molecular weight rubbers based on olefin, diene and/or other unsaturated monomers.

It should be noted that these low viscosity materials are in themselves well known in the industry, often as compound ingredients for pressure-sensitive adhesives, castable products, sealants and asphalt modifiers. They are also known as reactive viscosity modifiers, but their direct use in a mix for incorporating particulate rubber is new. The liquid rubbers are desirably used directly, not as emulsions. As with all rubber blends, it is important to select the liquid rubber type for compatibility with the base polymer in terms of both solubility and cure performance.

The present use is distinguished from that in US 4481335, where liquid rubber containing very high levels of curing agent was used in a separate process to treat the surface of recycled ground rubber particles, which were then used subsequently for direct moulding, or for subsequent incorporation into base rubbers. In our technique the liquid rubber is used more in the manner of a processing aid at the mixing stage. It need not be pre-applied to the rubber particles, it need not be blended separately with curing agent, and in particular not with levels of curing agent much higher than for the rest of the mix. Generally speaking, in the present techniques it is satisfactory to combine the liquid rubber directly with the base rubber and the rubber dust, the cure system being added later in the mixing cycle. For example the base rubber and liquid rubber may be initially combined and mixing commenced before addition of the rubber dust (and optionally other particulate fillers) and of the curing system: suitable methods are discussed below.

With the separate low viscosity/liquid rubber included, the mentioned base rubber typically constitutes from 75 to 95 parts per hundred of the total curable rubber (the remainder being the added low viscosity/liquid rubber).

The liquid rubber can cure/vulcanise within a base rubber matrix. Although of low molecular weight, and therefore assisting in surface wetting, liquid rubbers are still polymeric and will not significantly damage or swell the rubber dust particles. They do not contaminate or mask the cured rubber particle surface, and therefore do not inhibit crosslinking into the matrix. Similarly, the liquid rubber improves adhesion between the cured rubber particles and the base rubber matrix, leading to good processability. Finally, being entirely compatible with the cured system, the low viscosity or liquid polymer component has no solubility limit unlike some processing oils and therefore has no tendency to bloom to the surface of the cured product. This is important because such bloom is a problem in bonding other materials to the rubber, e.g. in laminated products.

[It should be noted that where figures in examples are given herein in terms of phr, added liquid rubber itself counts in the parts of rubber. However this is a choice; it is also legitimate to designate the base polymer system as constituting 100 phr and added liquid polymer as a process aid.]

### Particulate Cured Rubber

### [In the following, as before, references to "mesh" are to standard US sieve designations (ASTM)].

The cured rubber particles are preferably recycled rubber, e.g. from ground tyre material or mat material. This grinding may be conventional grinding or cryogenic grinding. Such ground and recycled rubber dust (crumb rubber) is well known, although as mentioned its use in performance rubber compounds has been very limited. Particles used at high levels have previously been the larger particles or granules, usually of diameter over 0.5 mm. While such larger particles can be incorporated using the present methods, and better than with previous methods in that the compounds become coherent and processable, the special benefit of the present methods is particularly found with incorporations of high levels of the smaller particles which prior art methods are unable to use. In known compounds made with rubber crumb additive, low physical and dynamic properties have to be accepted. The loss of strength can be attributed to the ease of initiating tear adjacent a particle (localised rise in stress) and the feeble adhesion of the particle surface to the surrounding rubber matrix. Furthermore, attempts to incorporate fine particles in conventional compounds require high levels of processing oils because of the difficulty of dispersing and wetting the rubber dust; this coats the particles and exacerbates the lack of chemical affinity as well as increasing oil content; again the end properties are badly affected.

In the present methods and products, however, the low viscosity curable rubber has a direct chemical affinity for the surfaces of the cured rubber particles. Furthermore, the rubber particles' surface activity, believed to be due to the "de-linking" of native crosslink sites, enables positive chemical bonding to the surrounding matrix.

The rubber dust may be used in an untreated state or, if preferred, treated to increase its surface activity e.g. by chlorination : alternatives are known to the skilled person. The smaller the particle size of the rubber dust, the greater its surface area and the greater the opportunity for such chemical recombination to take place. It is therefore realistic and preferable to use the smallest rubber dust available, within practical and commercial constraints, to achieve good physical properties in the cured product.

The use of fine particles is also highly desirable from the point of view of making smooth surfaced articles, and/or articles containing thin layers of the rubber in which large particles would disrupt the layer integrity.

Thus, while the particulate rubber is generally less than about 1.00 mm in particle size (18 mesh) the particles are preferably less than about 0.5 mm, more preferably less than about 0.25 mm or 0.2 mm, and still more preferably 0.15 mm or 0.1 mm or smaller. These are maximum sizes corresponding to passing a sieve; there is no problem if smaller or even immeasurably small dust particles are present too. Alternatively stated, the particles will pass through a number 40 mesh (0.425 mm), more preferably a 60 mesh (0.25 mm) or an 80 mesh (0.18 mm) or smaller.

A remarkable feature of the present technology is the ability to incorporate high percentages of the particulate cured rubber into a composition while maintaining high levels of processability and product performance. Thus, the rubber dust content of the composition may be at least 20%, 30%, 40%, 50% or even 60% (by weight) or more in the composition (or cured product). In particular, rubber dust contents of 20, 30 or 40% upwards with rubber particle sizes below 0.5 mm, preferably 0.25 mm or smaller, in a coherent curable compound which can be extruded or roll-processed, represent a crucial advance in the art. Previous compounds containing high levels of crumb rubber could not be processed in this way, and could not be used, as the present compounds can, to make roll-processed layer products such as mats or flooring, or flow-processed products.

Normally the recycled crumb rubber will contain other materials associated with its previous use. For example, recycled tyre rubber contains a proportion of supporting fibres from the tyre material e.g. polyamide, polyester or rayon. This is acceptable.

### Curing Systems

Generally speaking, a curing system appropriate to the selected base rubber can be used in line with conventional practice, in particular where a liquid rubber component can cure by the same system as a base rubber. Accelerators and activators may be used, again in line with conventional practice. Sulphur is a preferred vulcanising agent. Suitable activator systems include zinc oxide and stearic acid. Accelerators may be selected from conventional ones. Where the nature of the rubber demands it, antidegradants may be included (e.g. antioxidants and anti-ozonants).

### Fillers

Conventional rubber compounds often incorporate substantial levels of inert fillers such as clay and calcium carbonate, as well as reinforcing fillers such as carbon black and certain kinds of silica or aluminium silicate. In the present compositions inert fillers are preferably minimised or avoided, although reinforcing fillers and particularly carbon black can still be used. The wetting capability of the curable rubber (plus any other optional processing aids e.g. oil which may be included, but preferably is at modest levels) is preferably devoted to incorporating the particulate cured rubber at the highest possible level, plus any reinforcing filler such as carbon black. The incorporation of inert mineral filler such as calcium carbonate or clay uses valuable wetting capability to no good end, since the particulate rubber itself is an effective filler and moreover usually has a much lower density than inert mineral filler.

Preferably the amount of inert filler in the composition and corresponding cured rubber is not more than 25 or 20 phr, more preferably less than 10 or 15 phr and most preferably about 0. Alternatively stated, not more than about 15 wt%, preferably less than 5 or 7 wt% and most preferably about 0 wt%.

The density reduction by reliance on particulate rubber filler in preference to inert filler can be of great technical and commercial importance. With flooring and other products it may reduce transport costs and improve efficiency of handling and installation. To illustrate: conventional clay-loaded flooring rubber compounds have a density (specific gravity) above 1.4. Compounds embodying our invention filled essentially with crumb rubber can have densities of 1.2, 1.1 or less.

In contrast to inert filler, incorporation of a reinforcing filler and in particular a carbon black is often desirable in accordance with conventional practice, although the need to wet and disperse this filler must be taken into account as mentioned. Typical quantities of reinforcing filler such as carbon black are up to about 60 phr.

### Other Process Aids

As mentioned, it may be desirable to include some process oil or other processing aid in the rubber compound to improve mixing and dispersal of components. Since the low viscosity curable rubber component acts as a processing aid, the amount of other (typically non-curable) processing aid can therefore be kept low so that associated problems such as blooming can be minimised or avoided altogether.

The compound may also contain any one or more other additives in accordance with the skilled person's knowledge, for example a blowing agent if foaming is wanted, flame retardant for fireproofing, UV stabiliser and/or other appropriate additives.

### Processing and Mixing

Preparation of the compound can be carried out in a conventional mixer, e.g. an internal mixer having tangential rotors or intermeshing mixing elements. Other kinds of internal mixer or other mixer may be used; it is a feature of the present technology that special equipment is generally not required. Equally, the sequence of addition of compound ingredients may be generally conventional, and determined or adjusted using usual compounding skill. Where appropriate a natural rubber base polymer or a portion of it may be subject to a separate pre-inastication step to create a low molecular weight portion and enhance its wetting capability.

For example, in one process the base rubber and liquid rubber may be added to the mixture at the same time. Other components viz. crumb rubber, any mineral filler, carbon black, any process aids, protective system, activator system, accelerator system, cure system, other miscellaneous ingredients and scorch protection as selected are usually added subsequently. This can be in line with usual practice, treating the cured crumb rubber as a filler to be incorporated, and regarding the low viscosity or liquid rubber component as part of the base polymer or as a processing aid. Other sequences may be used if effective, e.g. adding liquid polymer and crumb rubber together to the mixture first, followed by base polymer and filler, or adding the liquid polymer as a process aid with the rubber dust later on.

There is no need to apply liquid rubber preliminarily to cured crumb rubber as in US 4481335, nor need the liquid rubber be combined with a separate increased amount of curing agent preliminarily as in that earlier patent.

Fill factor and addition times can be established in line with conventional skill to suit the machine in which the compound is mixed. Dump temperature should be controlled to maintain scorch safety as dictated by the chosen cure system, e.g. to below 110°C for a typical sulphonamide/thiuram system. The temperature in the mix during mixing (arising primarily from shear energy) is typically between 100 and 150°C. Mixing time is typically between 1 and 5 minutes.

Once mixed, the compound containing the dispersed rubber crumb forms a coherent processable batch which can be discharged from the mixer onto a suitable processing apparatus such as a two-roll open mill.

In line with conventional practice, further dispersion of the components can be achieved by cutting and blending the mixed batch on a two-roll mill.

From a two-roll mill, the mixed batch can be passed as a continuous coherent sheet which is able to support its own weight. This may then be processed in a conventional way, e.g. being passed through an anti-tack dip and allowed to cool before removal from the process and subsequent forming e.g. by compression moulding. Typically this may involve processing into a sheet of predetermined thickness and width using a calender. This gives the necessary accurate dimensions for subsequent moulding in a compression press, either by continuous feed of the calendered sheet or by the use of moulding blanks cut from the calendered sheet. Typical moulding is carried out at a temperature between 130°C and 180°C using a closing force sufficient to fully form the desired moulded product.

### FURTHER ASPECTS

A further aspect of the invention (claim 13) is a curable rubber compound obtained or obtainable by a method as described, comprising a homogeneous dispersion of the particulate cured rubber in the uncured base rubber. The compound may be in a bulk form or in a sheet form, e.g. calendered sheets.

A further aspec (claim 21) is an article consisting of, consisting essentially of or comprising a cured rubber composition obtained by curing a compound as defined above, comprising a cured rubber matrix in which the mentioned cured rubber particles are dispersed. Preferred articles include articles in laminar form, or which incorporate the cured rubber composition in laminar form, such as floorings, mats, covers and sheeting. Further particulars of such articles are discussed below.

A further aspect is a method of making an article as defined herein comprising forming a rubber compound as above and processing it by a forming step including processing on one or more rollers and/or extrusion. The formed web or extrudate can support and preferably does support its own weight in tension downstream of the forming step, e.g. between sets of rollers, and preferably is calendered. It is then subjected to cure preferably in a mould, and preferably under heat and/or pressure. Preferably a layer form of the compound is cured with heat under pressure in a mould press. Other components or elements may be joined to the resulting rubber either in the mould or subsequently. Such components may be other layers e.g. of textile (which may be tufted) or of other rubber or polymer film or sheet, or mechanical insert elements.

One particular product aspect of the invention now enabled is a mat comprising a fabric/textile layer bonded to a rubber backing layer. Preferably the textile layer is tufted. The rubber backing layer - which may be the sole backing layer for the textile layer - comprises a dispersion of cured rubber particles in a matrix of a second cured rubber, the cured rubber particles constituting at least 20 wt% of the rubber layer, or preferably at least 30 or at least 40 wt%. The rubber layer may be made using a method as described above; the corresponding preferences and options all apply. The cured rubber particles are desirably recycled rubber. Preferably both particles and matrix have the same rubber type, e.g. NBR or SBR or blends including these. In a preferred embodiment the particles are derived from recycled layer material e.g. mat material, - either conventional, or recycled material which itself is as proposed herein - which is recycled by comminution. The corresponding methods of making the mats including recycling of rubber or rubber-containing product (such as existing mats or mat material) is an aspect of the present proposals. Preferably the thickness of the mentioned rubber layer is from 1 to 20 mm. For loose mats the rubber layer is preferably less than 2, 3 or 4 mm thick. At these low thicknesses the smaller particle sizes for the dispersed rubber particulates are particularly advantageous, e.g. less than 0.5 mm or less than 0.25 mm.

### SHEET FORM ARTICLES

The invention provides articles, especially sheet form articles such as surface coverings e.g. flooring materials, mats or matting, made from the rubber compositions described. A surface covering may be a composite comprising at least one layer formed from the described rubber composition and at least one further layer e.g. of woven or nonwoven textile material. The textile material may be e.g. a polyamide, a polyester, a polypropylene, a natural fibre or a mixture thereof.

The surface covering may have a tufted surface, for example if the covering is for use as a carpet, mat or artificial turf. The tufts are typically incorporated into the textile layer described above.

Surface coverings with two or more rubber layers are also provided for by the invention. Preferably, the rubber layers are cross-linked together.

The rubber compositions may be processed as a continuous web. This makes it practical for uniform thickness sheet articles such as surface coverings to be formed by moulding of the web. Compression moulding can be carried out much more quickly and on a larger scale than injection moulding (the method used for most flooring coverings) and permits textural features to be introduced onto the covering.

A compression mould may be used. Typically the pressure used is up to about 1 tonne per square inch (about 0.16t/cm²) and the temperature is from about 110°C to about 195°C. This step may be preceded by a preforming step wherein the composition is extruded, rolled or calendered to produce a continuous planar web. Preferably the web is of a thickness of from about 0.5 mm to about 60 mm. The web may be coated, for example with glass particles, glass beads, metal dusts or granules of rubber to offer an improved appearance or performance. The web may be processed into slabs or wound into a roll before compression moulding.

Where the covering has a textile layer, the textile surface can be vulcanised onto one or both surfaces of the rubber web. This vulcanisation preferably occurs at a temperature of from about 120°C to about 220°C and a pressure of up to about 1 tonne per square inch (about 0.16t/cm²). In certain embodiments of the invention, for example where it is desired to create a soundproof covering, a textile or similar sound inhibiting component may be vulcanised between two layers of rubber web.

During the heating and compression moulding phase, the materials can be heated on one or both surfaces, or one surface can be cooled to protect the textile covered surface from melting or losing its thermoset memory.

Where the covering comprises two or more rubber layers, the first layer may be produced according to methods described herein and coated with a second layer of a rubber composition, preferably also of the invention, and the whole subjected to high pressure and temperature to bind the two layers together. Preferably, the second layer contains a cross-linking agent so that the second layer is cross-linked to the first. The second layer may contain a pigment.

Compression moulding may also be used to create patterns, protrusions or voids such as channels in the surface covering. Thus, the invention also provides a method of making a surface covering from the rubber composition of the invention which includes the step of applying pressure at raised temperature to said composition by means of a patterned surface, which surface may have protrusions and/or voids. Pressure and temperature may be as mentioned above.

The method may create voids or tunnels on one surface of the covering to accommodate cables or pipes, or to accommodate service hardware such as outputs for power or data. The method may also be used to produce protrusions such as an array of 'legs' on the underside of the web. This is of particular use where the covering is a floor covering, to increase the time of incident on footfall, dissipating the greater volumes of energy necessary to absorb the forces imparted. It can also be of use where the floor covering is to be used for sporting applications, in order to optimise the properties of the surface for ball games or athletics.

The method may also introduce indentations into the covering to reduce its overall weight. Through-apertures may be useful for drainage, or to allow vegetation to grow through.

Where the covering has a textile layer, the textile surface can also be patterned by compression moulding. For example, the textile layer may be offered sanctuary within a pressure plate in the compression mould which has voids in its surface, and the rubber surface of the covering heated, resulting in a semi-thermoset textile surface pattern.

The surface coverings are particularly well suited to use as floor coverings as they can have a high degree of hysteresis, offering efficient impact absorption by increasing the time of incident related to footfall or travel of wheeled traffic such as trolleys or castor wheeled chairs over the surface without the need for an additional load-spreading laminating layer. Increased time of incident increases slip resistance in dry or wet conditions by allowing more time at the point of contact, consequently creating more time for the foot to purchase, which also increases pedestrian comfort.

The surface coverings may be produced as a continuous web or as discrete panels. A relatively compact, modular panel may be used for example as a sport mat, such as a golf mat, or for flooring tiles. Barrier mats may also be produced in this way.

Continuous web surface coverings may be joined at the seams and seamed together to cover a large surface for use as resilient floor covering for high-use pedestrian areas such as hospitals, bus and rail stations, leisure flooring for schools, gyms, nursing homes, and for sporting uses such as artificial turf for track, tennis, field hockey, soccer, skiing and snowboarding. The coverings may also be employed as climbing wall crash mats, barrier mats, ice and roller rink surrounds, track, tennis, field hockey, soccer and ski and snowboarding slopes. The coverings can also be used to reduce impact on walls and ceilings as well as soundproofing for walls, ceilings and floors. The surfacing may be particularly useful in veterinary surgeries as well as post- and pre-operative accommodation for animals.

A particular feature is that at the end of its life the cured products themselves may be recyclable e.g. by grinding down to make particles which can be re-used to make a compound of the kind described herein.

### Factors Affecting Tuft Lock and Web Impregnation (mats & carpets)

The ability to achieve a good level of tuft lock will depend upon several controllable characteristics of the rubber compound, namely rubber flow, its ability to bond and the compound's processing safety (scorch time).

Rubber flow is the ability of an unvulcanised rubber compound to penetrate between and enclose the fibres of tufted yarn and is usually critical in achieving a satisfactory tuft lock. Methods for optimising rubber flow are mentioned elsewhere, in relation to wetting ability. The size of cured rubber particles is also relevant, as mentioned below.

The ability of a rubber compound to bond is affected by the rubber's chemical compatibility with the substrate. Various products are commercially available that can be added to rubber compounds to improve bonding to dissimilar materials, and these generally take the form of tackifying resins. The use of such materials in present matting or carpet compounds may be beneficial for enhancing tuft lock.

Further benefits may be seen through optimisation of the cure system and sulphur level. Conventional cure systems with sulphur levels above 1.5 phr and accelerator systems that exhibit a delay before cure onset and a steady progression of cure are likely to improve bonding performance.

Consideration should also be given to the qualities of the rubber dust. Fine particle sized dust will have a greater surface area to volume ratio than a coarse crumb. It is also likely that the activity on the surface will be at its greatest when freshly ground, deteriorating with time as active sites become occupied by contaminants. When formulated as described above for good flow, a compound containing smaller particles of rubber dust will more easily enter among and surround individual yarn filaments. The increased surface activity of freshly ground rubber dust may lead to an enhanced tuft lock through a greater retention of the rubber's physical properties. Rubber particles produced as a by-product of normally granulating tyre will be jagged and irregularly shaped. Such particles may well have a greater surface area and offer more surface activity than rubber produced in a grinding mill e.g. by cryogenic grinding where the particles have a smoother surface and more regular shape.

A full encapsulation of the tufting yarns is desirable for maximum tuft lock, and should be achieved before the onset of vulcanisation. A cure system should be selected that gives sufficient scorch time (process time before the onset of cure) to allow the rubber to fully flow around and wet on to the yarn filaments before the onset of crosslinking causes a viscosity increase in the compound. The amount of scorch safety needed will be dictated by the chosen cure temperature, the pressure used to consolidate the rubber to the back of the tufted yarn, and the density of the filaments.

Primary accelerators that give a delayed action before the onset of scorch, such as those from the sulphenamide range may be beneficial, with secondary accelerators chosen to achieve the desired rate of cure to maximise tuft lock. Consideration should also be given to produce output demands. Accelerator systems that give less well defined rheometer MH values and exhibit some marching modulus effect can show some improvement to tear strength and may increase both tensile strength and elongation at break, but this must be balanced with any need to control the cured product hardness and modulus.

Examples and reference examples are now described and discussed. In the drawings, which are referred to later,
Fig. 1 is a perspective view of a piece of matting having a tufted textile upper layer and a rubber lower layer, and
Fig. 2 is an enlarged cross-section thereof showing some further features.

### Example 1 (Reference)

In this example a low-viscosity rubber component is prepared by pre-masticating part of the NR in a mix. The pre-mastication mix is first prepared by mixing together under controlled conditions the ingredients shown;

### Pre-mastication mix

| | |
|---|---|
| Natural Rubber | 100.00phr |
| High Abrasion Furnace black | 5.00phr |
| Peptiser #1 | 0.20phr |
| Peptiser #2 | 2.00phr |

| | |
|---|---|
| Peptiser #1 is a combination of aromatic disulphide/metal - organic complex/fatty acid ester. Peptiser #2 is a blend of zinc soaps of natural fatty acids. | |

The premastication mix is mixed in an internal mixer of either a tangential or intermeshing mixing action. The mixer is first charged with the natural rubber, followed in order by the peptisers and the carbon black. The mixing is complete and the batch is removed from the mixer when it achieves a temperature of 155°C.

The purpose of this premastication stage is to modify the viscosity of the natural rubber to enhance its binding and processing properties when used in subsequent mixing. The viscosity of the described pre-mastication mix falls between the limits 30 to 55 when tested on a Mooney Viscometer under the test conditions of ML 1+4 @ 100°C.

The final mix uses a quantity of the premastication mix as one of the compound's ingredients. It is used to enhance the final compound's processability within the mixing process and for subsequent forming processes. The final mix is preferably carried out in an internal mixer of either a tangential or intermeshing mixing action.
The mixing process may be as described, or with variations to accommodate differences between mixer designs, size or levels of wear as will be understood by a person skilled in this field.

### Start

Load the mixer with polymers (base SBR and the described pre-mastication mix) and other components as detailed in Table 1, viz. mineral filler, crumb rubber, carbon black and oil.
Mix for 20 seconds.

### 20 Seconds From Start

Load process aids, protective system and activator system.
Mix for 20 seconds

### 40 Seconds From Start

Load accelerators, cross-linking system and scorch protection.
Mix until the shear forces of the mixing process cause the batch to reach 125°C (approximately 2 minutes from start of mixing).
Discharge the mixed batch from the mixer onto a two-roll open mill.

An adequate dispersion is achieved by cutting and blending the mixed batch on the two-roll open mill.

The mixed batch is then removed as a continuous sheet from the two-roll open mill, passed through a suitable anti-tack dip and allowed to cool before being removed from the process.

Formulations processed by the described mixing technique include the following compounds with references CM4, CM5, CM5/1, CM5/2, CM5/3, CM6 and CM7. Details of each of these variations are given in Table I. The table lists the specific gravity of each embodiment and the percentage of crumb rubber used. The reduction of the S.G. by the reduced levels of reinforcing and inert fillers (and the consequent increase in the percentage of crumb rubber employed) is significant.

**Table I**

| | **P.H.R.** | | | | | | |
|---|---|---|---|---|---|---|---|
| | **CM4** | **CM5** | **CM5/1** | **CM5/2** | **CM5/3** | **CM6** | **CM7** |
| Pre-mastication | 21.44 | 32.16 | 32.16 | 32.16 | 32.16 | 32.16 | 50.00 |
| SBR | 80.00 | 70.00 | 70.00 | 70.00 | 70.00 | 70.00 | 50.00 |
| Carbon Black | 50.00 | 40.00 | 40.00 | 40.00 | 40.00 | 20.00 | 0.00 |
| Aromatic Oil | 60.00 | 40.00 | 40.00 | 40.00 | 40.00 | 20.00 | 0.00 |
| Calcium Carbonate | 120.00 | 20.00 | 20.00 | 20.00 | 20.00 | 0.00 | 0.00 |
| Crumb Rubber | 100.00 | 150.00 | 160.00 | 170.00 | 180.00 | 225.00 | 170.00 |
| Tackifier | 5.00 | 3.00 | 3.00 | 3.00 | 3.00 | 0.00 | 0.00 |
| Zinc Oxide | 4.00 | 4.00 | 4.00 | 4.00 | 4.00 | 0.00 | 0.00 |
| Zinc Oxide Active | 0.00 | 0.00 | 0.00 | 0.00 | 0.00 | 2.00 | 2.00 |
| Stearic Acid | 2.00 | 2.00 | 2.00 | 2.00 | 2.00 | 1.00 | 1.00 |
| 6PPD | 1.50 | 1.50 | 1.50 | 1.50 | 1.50 | 1.50 | 1.50 |
| TMQ | 1.00 | 1.00 | 1.00 | 1.00 | 1.00 | 1.00 | 1.00 |
| TMTD - 80% | 0.25 | 0.25 | 0.25 | 0.25 | 0.25 | 0.25 | 0.25 |
| TBBS | 1.10 | 1.30 | 1.30 | 1.30 | 1.30 | 1.30 | 1.30 |
| Soluble Sulphur | 3.25 | 2.50 | 2.50 | 2.75 | 2.75 | 2.50 | 2.50 |
| PVI | 0.20 | 0.10 | 0.10 | 0.10 | 0.10 | 0.00 | 0.00 |
| Total P.H.R. | 449.74 | 367.81 | 377.81 | 388.06 | 398.06 | 376.71 | 279.55 |
| % Crumb Rubber | 22.24 | 40.78 | 42.35 | 43.81 | 45.22 | 59.73 | 60.81 |
| S.G. | 1.310 | 1.145 | 1.145 | 1.146 | 1.146 | 1.098 | 1.064 |

### FURTHER PROCESSING

The final mixed compound is further processed into a sheet of predetermined thickness and width through a calender. This forms the necessary dimensions for subsequent moulding of the rubber through a compression press, either by continuous feed of the calendered sheet or by the use of moulding blanks cut from the calendered sheet. Moulding is carried out at a temperature of between 130°C and 180°C using a closing force that is sufficient to fully form the final moulded product. The finished surface covering or mat has a uniform thickness and a uniform distribution of weight with the specific gravity as shown in Table 1 above.

Table II shows and compares the physical properties achieved in each of the above examples. It is clearly demonstrated that the removal of the reinforcing and inert fillers gives an improved ultimate tensile strength. The strain at failure initially reduces with the reduction of calcium carbonate from 120.00 phr to 20.00phr and carbon black from 50.00 phr to 40.00 phr, but then remains reasonably stable and unaffected by other changes. It is of particular noteworthiness that the increase in the proportion of crumb rubber (recycled rubber dust) employed appears to have no detrimental affect on physical properties and may even give an improvement to the ultimate tensile strength. The significant increase of ultimate tensile strength observed with compound CM7 is believed to be due in the main to the use of a higher proportion of the low viscosity pre-mastication mix. The pre-mastication mix is predominantly natural rubber, and inherently has a higher tensile strength than SBR due to an ability to exhibit strain induced crystallisation. While a unique feature of the described formulations is the high proportion of rubber crumb added, the use of pre-masticated natural rubber (or other high tensile strength rubber) that imparts valuable processability to the unvulcanised compound, and contributes to the retention of useful physical properties.

**Table II**

| **Compound** | **Tensile Strength** | **Strain at Failure** | **Modulus (E) at:** | | **Modulus Difference Low/Moderate Strain** |
|---|---|---|---|---|---|
| | **UTS (MPa)** | **ef (100%)** | **0 - 50 % e** | **100 - 300 % e** | |
| CM4 | | | | | |
| Replicate 1 | 5.244755245 | 5.338945946 | 1.3546 | 0.8461 | 0.5085 |
| Replicate 2 | 5.139982502 | 5.396702703 | 1.2507 | 0.8233 | 0.4274 |
| Replicate 3 | 4.034016572 | 4.376189189 | 1.2351 | 0.8271 | 0.408 |
| Replicate 4 | 4.96031746 | 5.341108108 | 1.4379 | 0.8033 | 0.6346 |
| Average | 4.844767945 | 5.113236487 | 1.319575 | 0.82495 | 0.494625 |
| S.D. | 0.553115706 | 0.492091472 | 0.09505673 | 0.017544135 | 0.102970234 |
| | | | | | |
| CM5 | | | | | |
| Replicate 1 | 5.372656607 | 4.839135135 | 1.3528 | 0.9878 | 0.365 |
| Replicate 2 | 5.340909091 | 4.780189189 | 1.408 | 0.9971 | 0.4109 |
| Replicate 3 | 4.906435418 | 4.440486486 | 1.636 | 0.987 | 0.649 |
| Replicate 4 | 5.280898876 | 4.764216216 | 1.5337 | 0.9808 | 0.5529 |
| Average | 5.225224998 | 4.706006757 | 1.482625 | 0.988175 | 0.49445 |
| S.D. | 0.215905277 | 0.179921792 | 0.12722155 | 0.006722289 | 0.130435182 |
| | | | | | |
| CM5/1 | | | | | |
| Replicate 1 | 5.416666667 | 4.925081081 | 1.3836 | 0.967 | 0.4166 |
| Replicate 2 | 5.274261603 | 4.675594595 | 1.3537 | 0.9734 | 0.3803 |
| Replicate 3 | 5.507065669 | 4.992351351 | 1.366 | 0.9836 | 0.3824 |
| Replicate 4 | 5.371900826 | 4.879324324 | 1.1803 | 0.9975 | 0.1828 |
| Average | 5.392473691 | 4.868087838 | 1.3209 | 0.980375 | 0.340525 |
| S.D. | 0.096805582 | 0.136466794 | 0.09453306 | 0.013306734 | 0.10645836 |
| | | | | | |
| CM5/2 | | | | | |
| Replicate 1 | 5.042918455 | 4.402243243 | 1.2969 | 1.0311 | 0.2658 |
| Replicate 2 | 4.746835443 | 4.279756757 | 1.4218 | 1.029 | 0.3928 |
| Replicate 3 | 4.466140424 | 4.161702703 | 1.2059 | 1.0256 | 0.1803 |
| Replicate 4 | 4.930156122 | 4.488162162 | 1.2981 | 1.0195 | 0.2786 |
| Average | 4.796512611 | 4.332966216 | 1.305675 | 1.0263 | 0.279375 |
| S.D. | 0.251786967 | 0.142650535 | 0.0886462 | 0.005068202 | 0.087304004 |
| | | | | | |
| CM5/3 | | | | | |
| Replicate 1 | 5.80270793 | 4.548567568 | 1.4153 | 1.1705 | 0.2448 |
| Replicate 2 | 6.230828221 | 4.747135135 | 1.3636 | 1.1861 | 0.1775 |
| Replicate 3 | 6.500956023 | 4.989405405 | 1.3909 | 1.1659 | 0.225 |
| Replicate 4 | 6.447267129 | 4.979945946 | 1.4266 | 1.1566 | 0.27 |
| Average | 6.245439826 | 4.816263514 | 1.3991 | 1.169775 | 0.229325 |
| S.D. | 0.317410259 | 0.21072091 | 0.02796534 | 0.012323791 | 0.039151277 |
| | | | | | |
| CM6 | | | | | |
| Replicate 1 | 6.275673209 | 4.47472973 | 1.4483 | 1.3216 | 0.1267 |
| Replicate 2 | 6.404494382 | 4.494918919 | 1.6546 | 1.32 | 0.3346 |
| Replicate 3 | 5.253940455 | 3.870486486 | 1.5264 | 1.3048 | 0.2216 |
| Replicate 4 | 5.711206897 | 4.078054054 | 1.6963 | 1.2923 | 0.404 |
| Average | 5.911328736 | 4.229547297 | 1.5814 | 1.309675 | 0.271725 |
| S.D. | 0.531716513 | 0.306817748 | 0.11445648 | 0.013837961 | 0.122467285 |
| | | | | | |
| CM7 | | | | | |
| Replicate 1 | 8.363933089 | 5.234135135 | 1.7669 | 1.5202 | 0.2467 |
| Replicate 2 | 8.610210697 | 4.941918919 | 1.6965 | 1.5947 | 0.1018 |
| Replicate 3 | 7.910750507 | 4.54427027 | 1.6635 | 1.6442 | 0.0193 |
| Replicate 4 | 8.333333333 | 4.697162162 | 1.5944 | 1.6614 | -0.067 |
| Average | 8.304556907 | 4.854371622 | 1.680325 | 1.605125 | 0.0752 |
| S.D. | 0.290322426 | 0.301530826 | 0.07170088 | 0.063284194 | 0.13349839 |

### Moulded Product Example

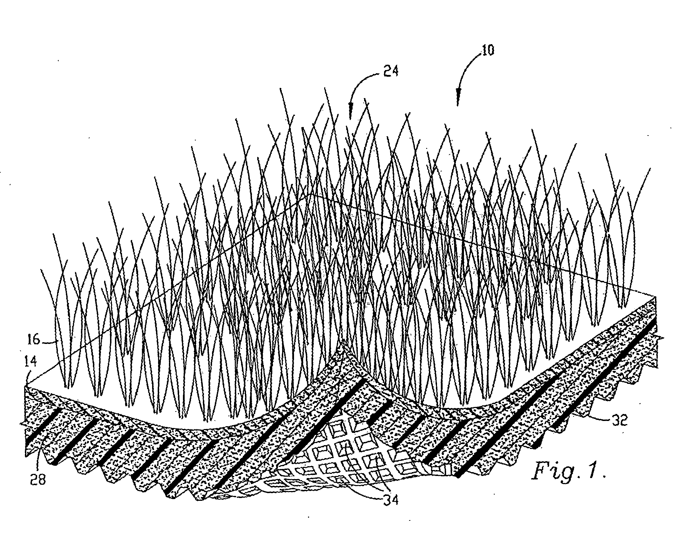

Fig. 1 shows a surface covering or mat 10 which has a lower layer 28 made of the rubber composition and an upper textile layer 14. The textile layer 14 has tufts 16 to create a tufted face 24. The lower rubber layer 28 has a plurality of spaced indentations 34. A number of spaced tunnels may extend through the underside of the surface covering.

The rubber layer 28 is of a rubber composition made from curable rubber and recycled rubber dust. The dust is made from used car tyres and consists primarily of SBR particles with a small proportion of residual textiles used to support vehicle tyres such as polyamide, polyester or rayon, and a curable rubber. The rubber composition is produced as described in Example 1 above.

The rubber layer 28 is cured by subjecting it to temperature of from about 110°C to about 195°C in a mould; the raised temperature and pressure cause the free ends of a substantial portion of the rubber dust particles to cross-link to the curable rubber as it cures. It is cured in a heated press equipped with a platen. The platen is provided with a series of spaced protrusions or voids, so that rubber layer 28 includes a corresponding pattern of voids, tunnels or protrusions 36. At the same time, cooling means are employed to cool the tufted face 24 to protect the tufts 16. Those skilled in the art will appreciate that any number of additional layers may be joined e.g. in the same manner.

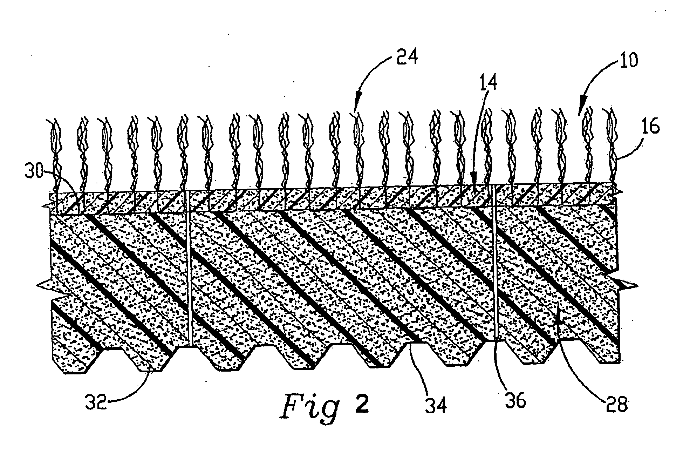

The rubber layer 28 enclosed within the press is placed in an oven, such as a gas, microwave or infra red oven, and cured. The resulting surface covering in the form of slabs or buns is placed in an evacuated enclosure at elevated temperatures. The slab or bun may then be cut into a variety of shapes. In the embodiment shown in Figs. 1 and 2, the rubber layer 28 is waffled or dimpled with an array of spaced indentations 34 which are introduced during curing by means of a shaped plate attached to the lower surface of the press. The indentations 34 reduce the overall weight of the covering 10. The number, size, and arrangement of the indentations 34 may be preselected in order to vary the dynamics and impact absorbing characteristics of the covering 10 in accordance with its intended use.

The weight (density) of the surface covering or mat 10 may also be reduced by addition of a chemical blowing agent to the rubber composition of the rubber layer 28. The overall weight may be controlled by adjusting the extent of any waffling and the amount of blowing agent used.

The surface covering 10 may be constructed in the form of a continuous web, or in modular form in any suitable size or geometric shape.

To create a tufted surface, a woven or nonwoven fabric web is generally employed as a tufting base or primary backing layer. A laminating layer of glue, rubber or synthetic resin can be applied over the exposed loops to lock the tufts into the fabric interstices. Conventional tufting machines employ rows of needles, which are threaded with a suitable yarn (typically polypropylene, polyamide or wool) fed from a ball or creel through an aperture adjacent the primary backing fabric. The backing fabric is typically a woven or nonwoven web with a weight of less than 150 g/m². The needles pierce the fabric from back to front, pushing the yarn through the backing. Looping tools catch the yarn loops on the face of the backing as the needles are withdrawn. Once tufting of the primary backing is completed, the loops of face yarn are generally cut to form a pile surface or "face". While the loops may be left uncut for indoor carpet surfaces, the loops of surfaces intended for outdoor usage are generally cut in order to produce a covering more closely resembling grass. The diameter of the yarn, the number of yarn strands in each tuft, and the spacing of the tufts determine the density of the final surface.

While the above steps and structures have been described in relation to matting made from an Example 1 rubber compound, the same or similar methods may be used with compounds described below.

### Examples II, III

### Formulation and Mixing Details

The formulations given below show a NR/SBR compound (Example II) and a NBR compound (Example III), both containing just over 40% by weight of 60 mesh rubber dust. Each formulation is successfully mixed and cured to give matting products with satisfactory properties. Changes to the formulations to achieve compound optimisation, including the grade and quantity of the liquid rubber used, are quite acceptable, providing the changes do not reduce the effectiveness of the liquid polymer within the system. Similarly, the mixing method employed suited the equipment available for the development work, and should not be considered prescriptive. The fill factor and addition times will need to be established to suit the machine in which the compound is mixed, although it is recommended that the dump temperature does not exceed 110°C so that an adequate scorch safety can be maintained. An internal mixer with tangential rotors was used for the development mixing.

### Example II

**Table 3**

| ***Natural Rubber*/*SBR*** | | |
|---|---|---|
| **Ingredients** | **phr** | |
| Pre-masticated NR | 32.250 | 100phr NR/7.5phr Pepton 66. ML1+4@100°C 30 tot 55 |
| DPR 40 | 10.000 | Liquid NR Supplied by Elementis |
| SBR 1502 | 60.000 | |
| N339 | 40.000 | |
| Aromatic Process Oil | 40.000 | |
| Rubber Dust Zinc Oxide | 135.000 | 60 mesh (0.25 mm) from ground tyre tread |
| | 4.000 | |
| Stearic acid | 2.000 | |
| Antidegradant BPH | 1.500 | Non-staining (Vulkanox BKF) |
| Antidegradant MMBI | 1.000 | Non-staining (Vulcanox ZMB2/C5) |
| TMTD - 80% | 0.250 | |
| TBBS | 1.300 | |
| Soluble Sulphur | 2.750 | |
| | | |
| **TOTAL** | 330.050 | |

| | | |
|---|---|---|
| S.G. 1.120 Hardness 50 IRHD | | |

Mixed using a 2.6 litre capacity laboratory Banbury mixer with tangential rotor mixing action.
Fill Factor 95%

| Mixing Cycle: | (Time from Start) |
|---|---|
| Natural Rubber/SBR/DPR40 | 0 minutes |
| Black/Oil/Rubber Dust | 0.5 minutes |
| Zinc Oxide/Stearic Acid | 1.0 minutes |
| Antidegradants/Cure System | 1.5 minutes |
| | |
| Dump to temperature @ 110°C | |
| | |
| **MDR @ 180°C** | |
| ML | 2.22 |
| ts2 | 0.77 |
| t50 | 0.81 |
| t90 | 1.44 |
| MH | 6.81 |

| | |
|---|---|
| Key/Notes NR : natural rubber DPR40: liquid NR : viscosity -40,000 cps @ 38°C avge MW 32,000 SBR 1502 : general purpose grade SBR; ML 1+4 (100°C)= 52 N339 : HA furnace black (ASTM designation) Aromatic process oil : mineral oil. This is a low amount for a filled NR-containing compound BPH : 2,6-di-t-butyl-4-methylphenol MMBI : Zn salt of 2-mercapto methylbenzoimidazole TMTD : tetramethylthiuramdisulfide TBBS : N-t-butyl-2-benzothiazolyl sulfenamide | |

### Example III

**Table 4**

| ***Nitrile*** | | |
|---|---|---|
| **Ingredients** | **Phr** | |
| NBR 34.50 | 80.000 | |
| Nipol 1312 LV | 20.000 | (Supplied by Zeon) |
| N660 | 40.000 | |
| Rubber Dust | 110.000 | 60 mesh (0.25 mm) from ground W.O.M. mat edge trimmings |
| D.O.P. | 10.000 | |
| Zinc Oxide | 5.000 | |
| Stearic Acid | 1.000 | |
| A.D.P.A. | 2.000 | (Permanax BLW) |
| CBS | 2.000 | |
| TMTM | 0.500 | |
| MC Sulphur | 2.000 | |
| | | |
| **TOTAL** | 272.500 | |

| | | |
|---|---|---|
| S.G. 1.150 Hardness 50 IRHD | | |

Mixed using a 2.6 litre capacity laboratory Banbury mixer with tangential rotor mixing action.
Fill Factor 95%

| Mixing Cycle: | (Time from Start) |
|---|---|
| NBR/Nipol 1312 LV | 0 minutes |
| Black/Oil/Rubber Dust/Sulphur | 0.5 minutes |
| Zinc Oxide/Stearic Acid | 1.0 minutes |
| Antidegradants/Accelerators | 1.5 minutes |
| | |
| Dump to temperature @ 110°C | |
| | |
| **MDR @ 180°C** | |
| ML | 1.26 |
| ts2 | 0.50 |
| t50 | 0.54 |
| t90 | 0.76 |
| MH | 8.17 |
| | |

| | |
|---|---|
| Key/Notes NBR : 50 is the Mooney viscosity ML 1+4 @ 100°C 34 is acrylonitrile content Nipol : low-viscosity NBR ∼29% ACN Brookfield viscosity range 9000-16000 (sample was 12000) ADPA : anti-oxidant/anti-ozonant : conventional (a p-phenylene diamine compound) CBS : accelerator: cyclohexylbenzothiazyl sulphenamide TMTM : accelerator: tetramethyl thiuram monosulphide MC sulphur : Mg coated (easier to disperse in nitrile rubber) WOM : walk-off mat | |

### Example IV

### (including reference examples)

Various nitrile rubber compositions were prepared, based on nitrile rubber and nitrile crumb rubber as in Example III, to investigate the effects of composition variations on processing and on product performance.

Tests on the cured products included standard tests for tensile strength, elongation of break, modulus at 300% extension and tear strength. Tear strength is of particular importance in laminar products, of which mats are an example.

The rheology data include the well-recognised parameters of lowest and highest torque, Ts1 and 90% torque to indicate the behaviour of the composition during cure.

The compositions were tested for mat use by backing a tufted textile layer with the composition. Tuft lock values are the force to pull out a tuft before and after washing the test piece.

The processing ratings are from 1 = Poor to 5 = excellent. The results for compositions A to M are given in Table 5 that follows. The compositions are described after the table, with comments on the results.

**Table 5**

| | | | | | **Rheology (MDR) 160c** | | | | | | | |
|---|---|---|---|---|---|---|---|---|---|---|---|---|
| **Mix** | **Tensile** | **E @ B** | **M300** | **Tear** | **ML** | **MH** | **Ts1** | **T90** | **Tuftlock** | **Tuftlock** | **Processing** | |
| | (MPa) | (%) | (MPa) | (N/mm) | | | | | **(Original)** | **(Washed)** | **Milling** | **Surface** |
| | | | | | | | | | | | | |
| A | 8.10 | 395.00 | 5.75 | 7.10 | 1.29 | 8.93 | 1.01 | 1.90 | 21.60 | 18.00 | 2 | 1 |
| | | | | | | | | | | | | |
| B | 9.66 | 455.00 | 5.50 | 7.10 | 0.96 | 8.38 | 1.03 | 1.90 | 23.50 | 18.90 | 3 | 3 |
| | | | | | | | | | | | | |
| C | 8.88 | 485.00 | 4.44 | 6.20 | 1.02 | 7.53 | 1.14 | 2.00 | 23.40 | 18.40 | 3 | 3 |
| | | | | | | | | | | | | |
| D | 9.00 | 595.00 | 3.28 | 10.50 | 1.34 | 6.07 | 0.95 | 2.00 | 20.20 | 12.30 | 2 | 1 |
| | | | | | | | | | | | | |
| E | 9.57 | 352.00 | 7.80 | 5.58 | 1.37 | 12.13 | 0.96 | 1.80 | 25.20 | 22.70 | 2 | 2 |
| | | | | | | | | | | | | |
| E (Repeat) | 9.98 | 365.00 | 7.69 | 5.78 | 1.34 | 12.30 | 0.96 | 1.80 | 26.40 | 24.90 | 2 | 2 |
| | | | | | | | | | | | | |
| F | 10.13 | 491.00 | 7.91 | 7.80 | 0.87 | 7.88 | 1.13 | 1.90 | 23.80 | 18.80 | 2 | 1 |
| | | | | | | | | | | | | |
| G | 10.98 | 412.00 | 7.22 | 6.76 | 1.13 | 11.22 | 1.11 | 2.00 | 20.30 | 16.00 | 3 | 1 |
| | | | | | | | | | | | | |
| H | 5.75 | 380.00 | 4.30 | 10.65 | 1.41 | 5.82 | 1.07 | 2.20 | 13.70 | 5.20 | 4 | 3 |
| | | | | | | | | | | | | |
| I | 6.70 | 510.00 | 3.54 | 9.90 | 1.31 | 5.13 | 1.06 | 2.10 | 11.50 | Delaminated | 4 | 3 |
| | | | | | | | | | | | | |
| J | 11.13 | 515.00 | 6.10 | 11.45 | 1.51 | 8.34 | 0.93 | 2.20 | 13.40 | 4.20 | 3 | 2 |
| | | | | | | | | | | | | |
| K | 8.11 | 542.00 | 3.52 | 9.55 | 0.76 | 5.98 | 1.51 | 2.40 | 28.40 | 21.60 | 2 | 1 |
| | | | | | | | | | | | | |
| L | 13.63 | 662.00 | 5.10 | 8.82 | 0.43 | 7.50 | 2.47 | 3.40 | 32.20 | 36.60 | 5 | 5 |
| | | | | | | | | | | | | |
| M | 11.71 | 495.00 | 6.34 | 9.71 | 1.36 | 8.18 | 1.46 | 2.70 | 20.00 | 10.10 | 3 | 2 |

| Description of Compositions | Comments on results |
|---|---|
| A: As in Example III, but base rubber Mooney viscosity is 45 | |
| | |
| B: As in Example III, but base rubber Mooney viscosity is 30 (low) | Use of the low viscosity base seems to have improved processability. The tear strength, although somewhat lower than ideal for a mat formulation, is excellent considering that 40% is crumb rubber |
| | |
| C: As in A, but doubling 'oil' (DOP) to compare with B (lower-viscosity base) | Returning to the higher viscosity base, and seeking to improve dispersion using instead more conventional processing aids. Tear strength is reduced. |
| | |
| D: As in A, but different accelerator system (slower) known for mat formation | A slower cure led to improved tear strength, although modulus and processing properties are not so good. |
| | |
| E: As in B (low-viscosity base) but liquid polymer omitted | Omitting liquid polymer and relying on the lower viscosity base, tensile strength and modulus were still comparatively good (higher overall MW); tear strength and processability were not so good. Tear strength is important in many web and layer products. |
| | |
| F: As in B (low-viscosity base), larger crumb (26 mesh) | The change to a larger crumb size - a more conventional crumb size - was accommodated well in these formulations. In general, larger crumb is easier to disperse as expected but surface finish and tear strength are not so good, and tuftlock is lower due to poorer rubber flow. |
| | |
| G: As in F (low-viscosity base, larger crumb) but omitting liquid polymer as in E | Even without liquid polymer, large crumb can be incorporated in lower-viscosity base (as for the smaller crumb in E). Somewhat anomalous test results, however. |
| | |
| H: An existing commercial nitrile mat base formulation: Mooney is 45, contains about 25 phr inert mineral filler. Liquid polymer and 60 mesh crumb at 40% added as in A | With added crumb rubber, this commercial formulation lost a lot of tensile strength. Probably attributable to the significant level of additional inert filler taking up wetting capacity of the formulation. Tuftlock is poor. Slow cure (as in D) improved tear strength. |
| | |
| I: As in H (modified commercial formula with liquid polymer and crumb rubber) but larger 26 mesh crumb as in F | Interesting improvements compared with H; perhaps due to the larger crumb's much lower specific surface area and hence less call on wetting capability. Poor tuftlock with large particles. |
| | |
| J: As in I but omitting the liquid polymer | Without liquid rubber additive: some (apparently anomalous) good test results. Poor tuftlock. |
| | |
| K: As in F (low-viscosity base, larger crumb, liquid polymer addition) | By raising liquid addition to 25 phr, good tear strength and tuftlock even with 50% crumb. This is large crumb, however. |
| | |
| L: As in A, but no rubber crumb at all (liquid polymer addition still used) | Without any rubber crumb, essentially the elastomeric properties of the nitrile rubber (with cured liquid nitrile blended). |
| | |
| M: As in J (commercial nitrile base viscosity 45, large crumb at 40%, no liquid polymer) but using the same cure system as in A | With faster cure, tear strength less than J. |

## Claims

1. A method of making a curable rubber compound in which particulate cured rubber (crumb rubber) is mixed with curable base rubber and a corresponding curing system, **characterised in that** the crumb rubber particles are all 1mm in size or smaller, and to wet the crumb rubber a liquid curable rubber is combined with a non-liquid curable base rubber, whereby a curable compound which can be roll-processed is formed.

2. A method according to claim 1 in which the non-liquid curable base rubber has a Mooney viscosity (ML1+4 @ 100°C) of from 30 to 80.

3. A method according to claim 1 or 2 in which the crumb rubber particles are all less than 0.5 mm in size.

4. A method according to claim 3 in which the crumb rubber particles are all less than 0.25 mm in size.

5. A method according to any one of the preceding claims in which the crumb rubber particles constitute at least 20% of the curable rubber compound.

6. A method according to claim 5 in which the crumb rubber particles constitute at least 30% of the curable rubber compound.

7. A method according to any one of the preceding claims in which the curable rubber compound contains not more than 15 wt% inert filler.

8. A method according to claim 7 in which the curable rubber compound contains not more than 5 wt% inert filler.

9. A method according to any one of the preceding claims in which the crumb rubber is recycled rubber.

10. A method according to claim 1 in which the liquid rubber and crumb rubber are separate from one another at least immediately before their respective addition to the mix.

11. A method according to claim 1 in which the amount of liquid curable rubber used is at least 5 phr.

12. A method according to any one of the preceding claims including forming the curable rubber compound into a coherent self-sustaining web between rollers.

13. A curable rubber compound, processable or processed by one or more methods selected from roll-processing, extrusion and flow moulding, obtainable by a method according to any one of claims 1 to 12.

14. A compound according to claim 13 in sheet form.

15. A method of making an article comprising curing a compound according to claim 13.

16. A method according to claim 15 in which the compound is cured with heating in a compression mould.

17. A method of claim 14, 15 or 16 comprising as a preliminary stage the preparation of the curable rubber compound by a method according to any one of claims 1 to 12.

18. A method according to any one of claims 15 to 17 in which the article is in layer form.

19. A method according to claim 18 in which the article comprises a layer of the rubber compound and a superimposed layer of fabric.

20. A method according to claim 19 in which the fabric is tufted.

21. An article consisting of or comprising crumb rubber-filled cured rubber, obtainable by a method according to any one of claims 15 to 20.

22. An article according to claim 21 which is a mat or flooring material comprising a textile layer bonded to a backing layer of said crumb rubber-filled cured rubber, in which the cured crumb rubber particles constitute at least 20 wt% of the rubber backing layer.

23. A mat or flooring material according to claim 22 in which the textile layer is tufted.

24. Mat or flooring material according to claim 22 or 23 in which in the backing layer the cured rubber particles and the matrix rubber include rubbers of the same type, selected from NBR, SBR and NR.

25. A mat or flooring material according to any one of claims 22 to 24 in which the rubber backing layer is from 1 to 20 mm thick.

26. A mat or flooring material according to any one of claims 22 to 25 in which the density of the rubber backing layer is not more than 1.2 g/cm³.

27. A method of making a mat or flooring material according to any one of claims 22 to 26 in which a roll-processed layer of the uncured rubber compound, comprising a coherent web comprising the cured rubber particles dispersed in the uncured second rubber, is joined to the textile layer under heat and compression in a mould to cure the second rubber.

## Patentansprüche

1. Verfahren zur Herstellung einer härtbaren Kautschukmischung, worin gehärtete Kautschukteilchen (Krümelgummi) mit härtbarem Basiskautschuk und einem entsprechenden Härtungssystem vermischt werden, **dadurch gekennzeichnet, dass** alle Krümelgummiteilchen 1 mm groß oder kleiner sind und dass zur Benetzung des Krümelgummis ein flüssiger härtbarer Kautschuk mit einem nichtflüssigen härtbaren Basiskautschuk kombiniert wird, wodurch ein härtbares Kompound gebildet wird, das einem Walzverfahren unterzogen werden kann.

2. Verfahren nach Anspruch 1, worin der nichtflüssige härtbare Basiskautschuk eine Mooney-Viskosität (ML1+4 bei 100 °C) von 30 bis 80 aufweist.

3. Verfahren nach Anspruch 1 oder 2, worin alle Krümelgummiteilchen eine Größe von weniger als 0,5 mm aufweisen.

4. Verfahren nach Anspruch 3, worin alle Krümelgummiteilchen eine Größe von weniger als 0,25 mm aufweisen.

5. Verfahren nach einem der vorangegangenen Ansprüche, worin die Krümelgummiteilchen zumindest 20 % der härtbaren Kautschukmischung bilden.

6. Verfahren nach Anspruch 5, worin die Krümelgummiteilchen zumindest 30 % der härtbaren Kautschukmischung bilden.

7. Verfahren nach einem der vorangegangenen Ansprüche, worin die härtbare Kautschukmischung nicht mehr als 15 Gew.-% eines inerten Füllstoffs enthält.

8. Verfahren nach Anspruch 7, worin die härtbare Kautschukmischung nicht mehr als 5 Gew.-% eines inerten Füllstoffs enthält.

9. Verfahren nach einem der vorangegangenen Ansprüche, worin der Krümelgummi rezyklierter Gummi ist.

10. Verfahren nach Anspruch 1, worin der flüssige Kautschuk und der Krümelgummi zumindest unmittelbar vor ihrer jeweiligen Zugabe zum Gemisch voneinander getrennt sind.

11. Verfahren nach Anspruch 1, worin die Menge des verwendeten flüssigen härtbaren Kautschuks zumindest 5 phr beträgt.

12. Verfahren nach einem der vorangegangenen Ansprüche, umfassend das Formen der härtbaren Kautschukmischung zu einem kohärenten, selbsttragenden Gewebe zwischen Walzen.

13. Härtbare Kautschukmischung, die mittels eines oder mehrerer Verfahren, ausgewählt aus Walzverfahren, Extrusionsverfahren und Spritzpressen, verarbeitbar ist oder verarbeitet ist und durch ein Verfahren nach einem der Ansprüche 1 bis 12 erhältlich ist.

14. Mischung nach Anspruch 13 in Bahnform.

15. Verfahren zur Herstellung eines Gegenstands, umfassend die Härtung einer Mischung nach Anspruch 13.

16. Verfahren nach Anspruch 15, worin die Mischung durch Erhitzen in einer Pressform gehärtet wird.

17. Verfahren nach Anspruch 14, 15 oder 16, umfassend als Vorstufe die Herstellung einer härtbaren Kautschukmischung durch ein Verfahren nach einem der Ansprüche 1 bis 12.

18. Verfahren nach einem der Ansprüche 15 bis 17, worin der Gegenstand in Lagenform vorliegt.

19. Verfahren nach Anspruch 18, worin der Gegenstand eine Kautschukmischungsschicht und eine darüber liegende Stoffschicht umfasst.

20. Verfahren nach Anspruch 19, worin der Stoff getuftet ist.

21. Gegenstand, der aus einem durch ein Verfahren nach einem der Ansprüche 15 bis 20 erhältlichen, mit Krümelgummi gefüllten, gehärteten Kautschuk besteht oder diesen umfasst.

22. Gegenstand nach Anspruch 21, der eine Matte oder ein Belagmaterial ist, umfassend eine Stoffschicht, die mit einer Trägerschicht aus dem mit Krümelgummi gefüllten, gehärteten Kautschuk verbunden ist, worin die gehärteten Krümelgummiteilchen zumindest 20 Gew.-% der Kautschukträgerschicht bilden.

23. Matte oder Belagmaterial nach Anspruch 22, worin die Stoffschicht getuftet ist.

24. Matte oder Belagmaterial nach Anspruch 22 oder 23, worin die gehärteten Krümelgummiteilchen und der Matrixkautschuk in der Trägerschicht aus NBR, SBR und NR ausgewählte Kautschuke desselben Typs umfassen.

25. Matte oder Belagmaterial nach einem der Ansprüche 22 bis 24, worin die Kautschukträgerschicht 1 bis 20 mm dick ist.

26. Matte oder Belagmaterial nach einem der Ansprüche 22 bis 25, worin die Kautschukträgerschicht eine Dichte von nicht mehr als 1,2 g/cm³ aufweist.

27. Verfahren zur Herstellung einer Matte oder eines Belagmaterials nach einem der Ansprüche 22 bis 26, worin eine gewalzte Schicht der ungehärteten Kautschukmischung, die ein kohärentes Gewebe umfasst, das die im ungehärteten zweiten Kautschuk dispergierten gehärteten Kautschukteilchen umfasst, mittels Wärme und Druck in einer Form mit der Stoffschicht verbunden wird, um den zweiten Kautschuk zu härten.

## Revendications

1. Procédé de fabrication d'un composé de caoutchouc durcissable dans lequel du caoutchouc durci particulaire (granulé de caoutchouc) est mélangé avec du caoutchouc de base durcissable et un système de durcissement correspondant, **caractérisé en ce que** les particules de granulé de caoutchouc ont toutes une taille de 1 mm ou moins et pour humidifier le granulé de caoutchouc un caoutchouc durcissable liquide est combiné à un caoutchouc de base durcissable non liquide, de sorte qu'un composé durcissable qui peut être traité au rouleau est formé.

2. Procédé selon la revendication 1, dans lequel le caoutchouc de base durcissable non liquide a une viscosité de Mooney (ML1 + 4 à 100 °C) de 30 à 80.

3. Procédé selon la revendication 1 ou 2, dans lequel les particules de granulé de caoutchouc ont toutes une taille inférieure à 0,5 mm.

4. Procédé selon la revendication 3, dans lequel les particules de granulé de caoutchouc ont toutes une taille inférieure à 0,25 mm.

5. Procédé selon l'une quelconque des revendications précédentes, dans lequel les particules de granulé de caoutchouc constituent au moins 20 % du composé de caoutchouc durcissable.

6. Procédé selon la revendication 5, dans lequel les particules de granulé de caoutchouc constituent au moins 30 % du composé de caoutchouc durcissable.

7. Procédé selon l'une quelconque des revendications précédentes, dans lequel le composé de caoutchouc durcissable ne contient pas plus de 15 % en poids de charge inerte.

8. Procédé selon la revendication 7, dans lequel le composé de caoutchouc durcissable ne contient pas plus de 5 % en poids de charge inerte.

9. Procédé selon l'une quelconque des revendications précédentes, dans lequel le granulé de caoutchouc est du caoutchouc recyclé.

10. Procédé selon la revendication 1, dans lequel le caoutchouc liquide et le granulé de caoutchouc sont séparés l'un de l'autre au moins immédiatement avant leur addition respective au mélange.

11. Procédé selon la revendication 1, dans lequel la quantité de caoutchouc durcissable liquide utilisé est d'au moins 5 phr.

12. Procédé selon l'une quelconque des revendications précédentes, comprenant la formation du composé de caoutchouc durcissable en une bande autoporteuse cohérente entre des rouleaux.

13. Composé de caoutchouc durcissable, traitable ou traité par un ou plusieurs procédés choisis parmi le traitement au rouleau, l'extrusion et le moulage par intrusion, pouvant être obtenu par un procédé selon l'une quelconque des revendications 1 à 12.

14. Composé selon la revendication 13 sous forme de feuille.

15. Procédé de fabrication d'un article comprenant le durcissement d'un composé selon la revendication 13.

16. Procédé selon la revendication 15, dans lequel le composé est durci par chauffage dans un moule de compression.

17. Procédé selon la revendication 14, 15 ou 16, comprenant comme étape préliminaire la préparation du composé de caoutchouc durcissable par un procédé selon l'une quelconque des revendications 1 à 12.

18. Procédé selon l'une quelconque des revendications 15 à 17, dans lequel l'article est sous forme de couches.

19. Procédé selon la revendication 18, dans lequel l'article comprend une couche du composé de caoutchouc et une couche superposée de tissu.

20. Procédé selon la revendication 19, dans lequel le tissu est touffeté.

21. Article constitué ou comprenant du caoutchouc durci rempli de granulé de caoutchouc, pouvant être obtenu par un procédé selon l'une quelconque des revendications 15 à 20.

22. Article selon la revendication 21, qui est un tapis ou un matériau de sol comprenant une couche textile liée à une couche de support dudit caoutchouc durci rempli de granulé de caoutchouc, dans lequel les particules de granulé de caoutchouc durci constituent au moins 20 % en poids de la couche de support de caoutchouc.

23. Tapis ou matériau de sol selon la revendication 22, dans lequel la couche textile est touffetée.

24. Tapis ou matériau de sol selon la revendication 22 ou 23, dans lequel dans la couche de support, les particules de caoutchouc durci et le caoutchouc de matrice comprennent des caoutchoucs du même type, choisis parmi NBR, SBR et NR.

25. Tapis ou matériau de sol selon l'une quelconque des revendications 22 à 24, dans lequel la couche de support de caoutchouc a une épaisseur de 1 à 20 mm.

26. Tapis ou matériau de sol selon l'une quelconque des revendications 22 à 25, dans lequel la densité de la couche de support de caoutchouc n'est pas supérieure à 1,2 g/cm³.

27. Procédé de fabrication d'un tapis ou d'un matériau de sol selon l'une quelconque des revendications 22 à 26, dans lequel une couche traitée au rouleau du composé de caoutchouc non durci, comprenant une bande cohérente comprenant les particules de caoutchouc durci dispersées dans le second caoutchouc non durci, est jointe à la couche textile par chaleur et compression dans un moule pour durcir le second caoutchouc.
